Europäisches Patentamt

(19) European Patent Office   (11) Veröffentlichungsnummer: **0 245 705**
**B1**
Office européen des brevets

(12) EUROPÄISCHE PATENTSCHRIFT

(45) Veröffentlichungstag der Patentschrift:
14.11.90

(21) Anmeldenummer: 87106231.1

(22) Anmeldetag: 29.04.87

(51) Int. Cl.⁵: **H01M 2/02,** H01M 10/39,
B32B 15/01

(54) Elektrochemische Speicherzelle.

(30) Priorität: 06.05.86  DE 3615240

(43) Veröffentlichungstag der Anmeldung:
19.11.87 Patentblatt 87/47

(45) Bekanntmachung des Hinweises auf die Patenterteilung:
14.11.90 Patentblatt 90/46

(84) Benannte Vertragsstaaten:
BE DE FR GB IT NL

(56) Entgegenhaltungen:
DE-A- 1 954 031
DE-A- 2 720 726
FR-A- 2 371 782
US-A- 3 413 150

PATENT ABSTRACTS OF JAPAN, Band 9,
Nr. 15 (E-291)[1738], 22. Januar 1985; &
JP-A-59 165 378 (HITACHI KINZOKU K.K.) 18-09-1984
PROC. - POWER SOURCES SYMP. 1978, 28.,
Seiten 7-11, GB; A. TOPOUZIAN et al.: "The
sodium-sulfur battery: a progress report"

(73) Patentinhaber: Asea Brown Boveri Aktiengesellschaft,
Kallstadter Strasse 1, D-6800 Mannheim-Käfertal(DE)

(72) Erfinder: Knödler, Reinhard, Dr., Dipl.-Phys., Lattweg 17,
D-6902 Sandhausen(DE)

(74) Vertreter: Rupprecht, Klaus, Dipl.-Ing. et al, c/o BBC
Brown Boveri Aktiengesellschaft ZPT
Postfach 100351 Kallstadter Strasse 1,
D-6800 Mannheim 1(DE)

## Beschreibung

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrten Maße ihre Anwendung beim Aufbau von Speicherbatterien, die zur Stromversorgung von Elektrofahrzeugen vorgesehen sind.

Ein spezielles Beispiel für diese Speicherzellen sind solche auf der Basis von Natrium und Schwefel, die wiederaufladbar sind und einen Festelektrolyten aus Betaaluminiumoxid besitzen, der den Anodenraum vom Kathodenraum trennt. Als Vorteil dieser Speicherzellen ist hervorzuheben, daß bei ihrem Laden keine elektrochemischen Nebenreaktionen ablaufen, und die Stromausbeute daher etwa bei 100 % liegt. Bei solchen Speicherzellen ist der Anodenraum mit Natrium gefüllt und innerhalb des Festelektrolyten angeordnet. Der Kathodenraum liegt zwischen dem Festelektrolyten und dem metallischen Gehäuse, welches die Speicherzelle nach außenhin begrenzt. Für die Herstellung des Gehäuses wird vorzugsweise Aluminium verwendet. Bei den in der Speicherzelle enthaltenen Reaktanden bzw. bei den sich bildenden Reaktionsprodukten handelt es sich um sehr korrosive Stoffe. Es ist deshalb nicht auszuschließen, daß die mit den Reaktanden in Kontakt kommenden Gehäusewandungen korrosiven Einflüssen ausgesetzt sind. Zur Behebung dieser Nachteile wurde bereits in der Zeitschrift "Thin Solid Films 83 (1981, Seite 417) " vorgeschlagen, die Innenflächen der metallischen Gehäuse dieser Speicherzellen mit einer Korrosionsschutzschicht zu überziehen. Zur Bildung dieser Korrosionsschutzschicht wurden Legierungen vorgeschlagen, die Chrom, Nickel, Kobalt und Molybdän enthalten.

Aus der DE-OS 24 57 418 ist eine elektrochemische Speicherzelle bekannt, auf deren Innenflächen eine Schutzschicht aus Graphit aufgetragen ist.

In der US-PS 37 49 603 ist ein metallisches Gehäuse aus Leichtmetall beschrieben, dessen Innenflächen durch einen Überzug aus Molybdänsulfid vor Korrosion geschützt werden.

Die vorgenannten Möglichkeiten sind zwar in der Lage den Korrosionswiderstand des Gehäuses kurzfristig zu verbessern, jedoch ist hiermit der Nachteil in Kauf zu nehmen, daß der Innenwiderstand der Speicherzellen mit zunehmendem Alter durch Bildung von sulfidhaltigen Schichten auf der Innenwand des Gehäuses sehr stark ansteigt oder sich sonstige nicht leitenden Schichten bilden.

Aus der FR-A 2 371 782 ist eine elektrochemische Speicherzelle mit einem inversen Aufbau bekannt. Der Stromkollektor dieser Speicherzelle ist gegen die korrosiven Einwirkungen von Sulfiden und Polysulfiden mit einer Schutzschicht auf seiner Oberfläche überzogen. Die Schutzschicht enthält u.a. Nickel, Chrom, Eisen und Kobalt.

Der Erfindung liegt die Aufgabe zugrunde, eine elektrochemische Speicherzelle mit einem Gehäuse aus Leichtmetall zu schaffen, das gegenüber den Reaktanten und sich bildenden Reaktionsprodukten beständig ist.

Diese Aufgabe wird erfindungsgemäß durch die Merkmale des Patentanspruches 1 gelöst.

Weitere erfindungswesentliche Merkmale sind Unteranspruch 2 gekennzeichnet.

Die Erfindung wird nachfolgend anhand einer Zeichnung näher erläutert.

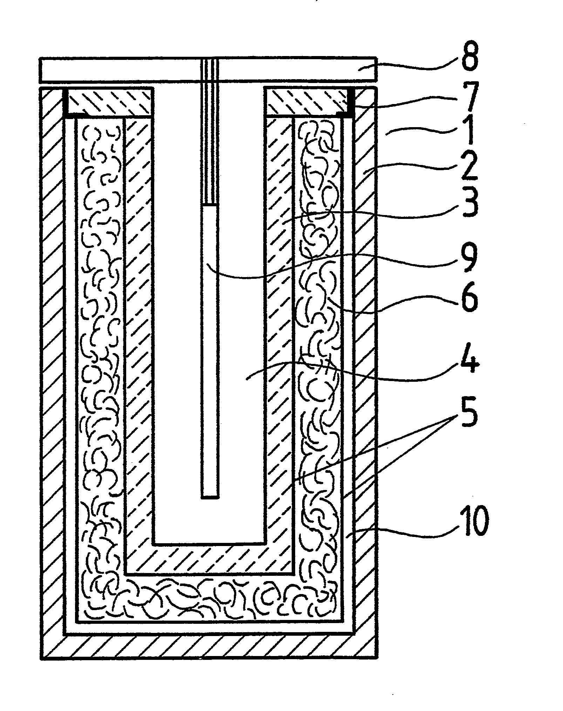

Die in der Figur dargestellte Speicherzelle 1 wird nach außenhin durch ein metallisches Gehäuse 2 begrenzt, das bei dem hier dargestellten Ausführungsbeispiel becherförmig ausgebildet ist. Es ist aus einem Leichtmetall, vorzugsweise aus Aluminium hergestellt. Im Inneren des metallischen Gehäuses 2 ist ein ebenfalls becherförmig ausgebildeter Festelektrolyt 3 angeordnet. Er ist aus Betaaluminiumoxid gefertigt, das eine Bruchfestigkeit von größer/gleich 100 MPa aufweist. Sein Innenraum dient als Anodenraum 4. Dieser ist bei dem hier dargestellten Ausführungsbeispiel mit Natrium gefüllt. Die Abmessungen des Festelektrolyten 3 sind so gewählt, daß zwischen seinen Außenflächen und den Innenflächen des metallischen Gehäuses ein zusammenhängender Zwischenraum verbleibt, der als Kathodenraum dient. Der Kathodenraum 5 enthält die Elektrode 6, die aus einem filz- bzw. einem faserförmigen Material auf der Basis von Graphit oder Kohlenstoff gefertigt ist. Zusätzlich ist die Elektrode mit Schwefel getränkt. Die Abmessungen der Elektrode 6 sind so gewählt, daß durch sie der gesamte Kathodenraum ausgefüllt ist. Erfindungsgemäß sind die Innenflächen des Gehäuses 2 von einer Korrosionsschutzschicht 10 überzogen. Diese Korrosionsschutzschicht besteht aus einer Legierung, die Eisen, Chrom, Nickel, Kobalt und/oder Molybdän als wesentliche Bestandteile enthält. Die Legierung enthält als Nickeläquivalent neben Nickel, Kohlenstoff und/oder Mangan. Als Chromäquivalent sind neben Chrom, Silizium, Molybdän, Vanadium, Aluminium, Niob, Titan und/oder Wolfram in der Legierung enthalten. Der wichtigste Bestandteil ist aber Chrom, wobei ein Gehalt zwischen 23 und 26 % vorgesehen ist. Die Zusammensetzung der Legierung ist insbesondere so gewählt, daß der Anteil des Nickeläquivalents in der Legierung um 10 % kleiner ist als der Anteil des Chromäquivalent. Eine bevorzugte Zusammensetzung der für die Korrosionsschutzschicht 10 verwendeten Legierung weist 13 bis 15 % Nickel oder Kobalt, 0,1 % Kohlenstoff und 1 % Mangan sowie 23 bis 26 % Chrom und 1 % Silizium auf, wobei der restliche Anteil der Legierung aus Eisen besteht. Zur Ausbildung der Korrosionsschutzschicht wird die Innenfläche des zu schützenden Gehäuses 2 vor dem Aufbringen der Legierung gereinigt. Anschließend wird das in Pulverform vorliegende Legierungsmaterial mit Hilfe eines bekannten Plasmaspritzverfahrens bzw. eines Flammspritzverfahrens auf die Innenflächen des Gehäuses 2 aufgetragen. Eine Korrosionsschutzschicht aus einer Legierung, wie sie oben beschrieben ist, weist eine austenitische Struktur auf und besitzt damit einen hohen Ausdehnungskoeffizienten, der bei etwa $16 \times 10^{-6} \text{grd}^{-1}$ liegt. Hierdurch wird erreicht, daß die sich zwischen dem Aluminium des Gehäuses 2 und der aufgetragenen Korrosionsschutzschicht 10 bildenden mechanischen Spannungen bei dem Aufheizen und Abkühlen der Speicherzelle 1 nur sehr gering sind. Die Bildung von Rissen in der Korrosionsschutzschicht ist hierbei vollständig ausgeschlossen. Das Vordringen der Reaktanden und Reaktionsprodukte zum eigentlichen Gehäuse der Speicherzelle ist nicht möglich, so daß dieses dauerhaft geschützt ist. Da sich keine Risse in der Korrosionsschutzschicht bilden, besteht auch keine Gefahr, daß sich diese Schicht schnell von der Gehäusewand ablöst, vielmehr ist die Korrosionsschutzschicht so langlebig wie die Speicherzelle selbst.

Nach der Ausbildung der erfindungsgemäßen Korrosionsschutzschicht 10 auf der Innenfläche des metallischen Gehäuses 2 wird die Speicherzelle 1 zusammengebaut, indem zunächst der Kathodenraum 5 mit der Elektrode 6, die den Schwefel enthält, ausgefüllt und anschließend der Festelektrolyt 3 in das metallische Gehäuse 2 eingesetzt wird. Der Innenraum des Festelektrolyten 3 enthält das Natrium. Am oberen offenen Ende des Festelektrolyten 3 ist ein Isolierring 7 angeordnet, der aus Alphaaluminiumoxid gefertigt ist. Er ist über ein Glaslot (hier nicht dargestellt) mit dem Festelektrolyten 3 verbunden und steht nach außen über, so daß hierdurch ein Flansch gebildet wird. Die Abmessungen des Rings 7 sind so gewählt, daß er an die Innenflächen des metallischen Gehäuses 2 angrenzt und damit den zwischen dem Festelektrolyten 3 und dem metallischen Gehäuse 2 gebildeten Kathodenraum 5 nach außen verschließt. Der Verschluß des gesamten Innenraums der Speicherzelle 1 erfolgt über einen Deckel 8, der mit dem metallischen Gehäuse 2 dauerhaft verbunden ist. Der Deckel 8 ist aus einem elektrisch leitenden Material gefertigt. An seiner nach unten weisenden Seite ist ein Stab 9 befestigt, der ebenfalls aus einem elektrisch leitenden Material gefertigt ist und als anodischer Stromkollektor dient. Als kathodischer Stromkollektor dient das metallische Gehäuse 2.

**Patentansprüche**

1. Elektrochemische Speicherzelle auf der Basis von Natrium und Schwefel mit einem Anodenraum (4) und einem Kathodenraum (5), die durch einen alkaliionenleitenden Festelektrolyten (3) voneinander getrennt und wenigstens bereichsweise von einem metallischen Gehäuse (2) begrenzt sind, das wenigstens auf seiner Innenfläche mit einer Korrosionsschutzschicht (10) versehen ist, die als wesentliche Bestandteile Eisen, Nickel, Kobalt und Chrom enthält, dadurch gekennzeichnet, daß die Korrosionsschutzschicht durch eine Legierung gebildet ist, deren Nickeläquivalent kleiner ist als ihr Chromäquivalent, und die 13 bis 15 Gew.% Nickel oder Kobalt, 0,1% Kohlenstoff und 1% Mangan sowie 23 bis 26% Chrom und 1% Silizium, bezogen auf das Gesamtgewicht der Legierung enthält, wobei der Rest Eisen ist.

2. Elektrochemische Speicherzelle nach Anspruch 1, dadurch gekennzeichnet, daß das Nickeläquivalent der Legierung um etwa 10 % kleiner ist als das in der Legierung enthaltene Chromäquivalent.

**Claims**

1. Electrochemical storage cell based on sodium and sulphur having an anode space (4) and a cathode space (5) which are separated from each other by a solid electrolyte (3) which conducts alkali metal ions and is bounded at least regionally by a metallic casing (2) which is provided on its internal surface with an anti-corrosion layer (10) which contains iron, nickel, cobalt and chromium as essential components, characterized in that the anti-corrosion layer is formed by an alloy whose nickel equivalent is less than its chromium equivalent and which contains 13 to 15% by weight nickel or cobalt, 0.1% carbon and 1% manganese and also 23 to 26% chromium and 1% silicon, based on the total weight of the alloy, the remainder being iron.

2. Electrochemical storage cell according to Claim 1, characterized in that the nickel equivalent of the alloy is about 10% less than the chromium equivalent contained in the alloy.

**Revendications**

1. Cellule d'accumulateur électrochimique à base de sodium et de soufre, comportant un espace anodique (4) et un espace cathodique (5) qui sont séparés l'un de l'autre par un électrolyte solide (3) conducteur d'ions alcalins et qui, au moins dans certaines zones, sont délimités par une enveloppe métallique (2) qui est pourvue, au moins sur sa face interne, d'une couche anti-corrosion (10) qui contient comme principaux constituants du fer, du nickel, du cobalt et du chrome, caractérisée en ce que la couche anti-corrosion est formée d'un alliage dont l'équivalent de nickel est inférieur à son équivalent de chrome et qui contient de 13 à 15% en poids de nickel ou de cobalt, 0,1% de carbone et 1% de manganèse, ainsi que 23 à 26% en poids de chrome et 1% de silicium par rapport au poids total de l'alliage, le reste étant du fer.

2. Cellule électrochimique selon la revendication 1, caractérisée en ce que l'équivalent de nickel de l'alliage est inférieur d'environ 10% à l'équivalent de chrome qui est contenu dans l'alliage.